Europäisches Patentamt

(19) European Patent Office

Office européen des brevets

(11) Numéro de publication: **0 120 813**
**B1**

(12) # FASCICULE DE BREVET EUROPÉEN

(45) Date de publication du fascicule du brevet:
**10.06.87**

(21) Numéro de dépôt: **84810132.5**

(22) Date de dépôt: **20.03.84**

(51) Int. Cl.⁴: **G 01 G  11/00,** G 01 G  11/04,
G 01 G  11/18

(54) **Procédé de pesage en continu de produits divisés et dispositif pour la mise en oeuvre de ce procédé.**

(30) Priorité: **24.03.83  CH 1617/83**

(43) Date de publication de la demande:
**03.10.84 Bulletin 84/40**

(45) Mention de la délivrance du brevet:
**10.06.87 Bulletin 87/24**

(84) Etats contractants désignés:
**AT BE CH DE FR GB IT LI LU NL SE**

(56) Documents cité:
**DE-A-2 734 562**
**FR-A-1 233 995**
**FR-A-1 397 443**
**US-A-4 126 196**
**US-E-29 944**

(73) Titulaire: **HASLER FRERES INTERNATIONAL S.A.,**
**Chemin de la Scierie, CH- 2013 Colombier (CH)**

(72) Inventeur: **Chauveau, Jean- Marie, Petit Coirtaillod**
**22, CH- 2016 Cortaillod (CH)**

(74) Mandataire: **Nithardt, Roland, CABINET ROLAND**
**NITHARDT Rue Edouard Verdan 15, CH- 1400**
**Yverdon (CH)**

EP 0 120 813 B1

# 0 120 813

**Description**

La présente invention concerne un procédé de pesage en continu de produits divisés transportés par un convoyeur à bande. Elle concerne également un dispositif pour la mise en oeuvre de ce procédé (revendications 1 et 7).

Dans les convoyeurs a bande, il est de pratique courante de faire appel a des balances intégratrices pour mesurer et totaliser les quantités de matières convoyées. Ces dispositifs sont constitués habituellement par un pont de mesure qui inclut une ou plusieurs stations de rouleaux porteurs dont on mesure le poids à l'aide d'un mécanisme de balancerie relié à un capteur. Une génératrice tachométrique, qui est en général couplée avec le brin de retour de la bande du convoyeur, fournit un signal proportionnel à la vitesse de la bande. Le poids P de la matière sur la bande est mesuré en amplifiant, dans un rapport correct, le signal fourni par le capteur. Le débit de la matière est donné par la relation:

$$Q = P \times V$$

où P représente le poids et V la vitesse. Un signal proportionnel au débit est injecté dans un convertisseur tendont la fréquence est proportionnelle à l'amplitude. Ces impulsions sont comptabilisées dans des totalisateurs qui fournissent une indication relative à la quantité de matière convoyée pendant un intervalle de temps donné.

Ces dispositifs présentent l'inconvénient majeur d'être relativement peu précis et le souhait, unanimement partagé par les utilisateurs, de vouloir améliorer la précision est difficilement réalisable, car il impliquerait:
- la maîtrise de l'épaisseur du tapis convoyeur, dont le poids par unité de longueur représente la tare et dont les variations de poids sont cause d'une erreur de lecture,
- l'augmentation de la longueur du pont de mesure, en faisant appel à des stations à plusieurs rouleaux suspendus pour disposer d'une aire de pesage plus importante permettant d'intégrer les fluctuations de la tare et de la vitesse,
- la maîtrise de la tension de la bande du convoyeur.

Certains de ces paramètres sont difficilement contrôlables sur des installations de grandes dimensions, en particulier lorsque le convoyeur comporte une bande de grande longueur composée d'une multitude de segments juxtaposés. L'augmentation de la longueur des ponts de mesure entraîne des investissements coûteux et une augmentation sensible de la complexité des appareillages.

En outre, l'absence de moyens de contrôle, fournissant une indication de "bon fonctionnement" en cours d'utilisation du dispositif de pesage, a souvent conduit les utilisateurs à préférer des dispositifs de pesée du type "continu-discontinu-continu" pour résoudre les problèmes de pesage à caractère commercial. Ces dispositifs sont généralement constitués par une trémie tampon, dans laquelle le convoyeur déverse la matière par une trémie de pesée qui reçoit périodiquement la matière momentanément stockée dans la trémie tampon, etpar une seconde trémie tampon qui reçoit la matière déchargée par la trémie de pesée pour la guider vers un convoyeur de reprise. Un dispositif de contrôle somme les différentes pesées et permet de connaître la quantité de matière convoyée. Malheureusement, ces dispositifs nécessitent une infrastructure lourde et coûteuse et engendrent des frais d'exploitation élevés. En effet, l'utilisation d'un convoyeur qui élève la matière jusqu'à la première trémie tampon implique une consommation en énergie qui peut être très importante.

Par la demande de brevet allemand DE-OS-2 734 562, on connait un autre procédé destiné à détecter les erreurs de pesage, en utilisant un convoyeur à bande comportant un pont de mesure relativement long qui repose sur deux capteurs de poids. Grâce à deux indicateurs de vitesse qui sont couples respectivement à ces deux capteurs, un dispositif électronique integre les deux debits mesures simultanément, en cumulant la somme et la différence instantanées de ces deux valeurs de débit. De cette manière, on obtient une valeur moyenne de poids à partir de la somme des deux valeurs, et un contrôle du bon fonctionnement des appareils de mesure à partir des différences des deux valeurs de débit, cumulées sur un certain temps. Cependant, ce procédé et cette réalisation ne permettent nullement d'eliminer les erreurs de pesage provenant des variations du poids de la bande elle-même. D'autre part, en cas de différence cumulée excessive entre les deux valeurs mesurées, le dispositif enclenche une alarme, mais il n'est pas à même d'indiquer quelle valeur est erronée ou quel appareil est défaillant. Dans un tel cas, l'opérateur est généralement contraint d'arrêter le fonctionnement du convoyeur. Enfin, en raison de sa longueur relativement importante, le pont demesure est mal adaptable après coup sur un convoyeur traditionnel.

La présente invention se propose de pallier l'ensemble des inconvénients susmentionnés par un procédé simple et efficace, et par une installation adéquate ne nécessitant aucune infrastructure lourde et coûteuse et adaptable sur des équipements traditionnels.

En définissant au préalable une unité de déplacement linéaire de la bande du convoyeur et un point origine de cette bande, on peut définir une variable d'espace X qui permet de repérer théoriquement un point quelconque de la bande. Si l'on découpe la bande en segments fictifs, dont la longueur correspond à l'unité de déplacement linéaire préalablement définie, on obtient un ensemble de points de repère régulièrement disposés le long de la bande, auxquels sont respectivement associés des variables d'espace correspondant à un nombre entier d'unités de déplacement linéaire de la bande comptées à partir du point origine de la bande. Cette notion de variable d'espace permet de localiser d'une manière très précise la charge de la bande à vide

2

et la charge de la bande transportant des produits. Le poids mesuré par un pont de mesure est une fonction P (X) de la variable d'espsce X du point de repère correspondant de la bande. La quantité de matière convoyée est définie comme étant la charge de la bande déchargée entre deux points de repère définis par les valeurs correspondantes $X_1$ et $X_2$ de la variable d'espace. Le débit est défini comme étant la quantité de matière convoyée par unité de temps. La vitesse V de la bande est très classiquement définie par rapport à un repère fixe du dispositif, par exemple par rapport à un pont de pesage, et on lui associe la variable temps T.

Le repérage d'espace ou la définition de la variable d'espace s'effectue au moyen d'un dispositif permettant de découper la bande en segments fictifs de même longueur, et de compter un nombre N de ces segments. Si dX est l'unité de déplacement linéaire de la bande, l'espace bande est découpé en longueurs dX de N segments fictifs. Toutes les mesures de poids seront effectuées de telle manière qu'elles sont distantes de dX dans l'espace bande. La précision des mesures d'espace dépend du choix de l'unité dX et du nombre N des segments fictifs. La précision spatiale est égale à:

$$e = dX/N$$

Dans les cas courants, dX est de l'ordre de 5 cm et N est de l'ordre de 100.

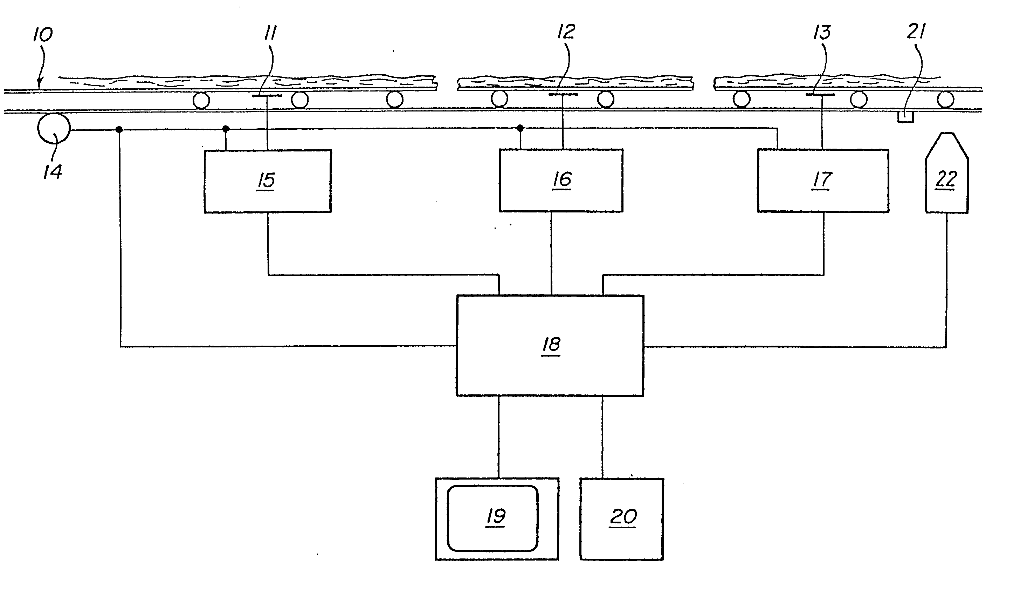

Les applications directes de cette notion de repérage d'espace de la bande seront comprises en référence à la description d'un exemple de réalisation du dispositif selon l'invention et du dessin annexé, dans lequel la figure unique est une vue schématique illustrant une forme préférée de mise en oeuvre du dispositif de l'invention comportant trois ponts de mesure.

En référence à la figure, le dispositif comporte un convoyeur à bande 10 équipé de trois ponts de pesage 11, 12, 13, comportant chacun une balance intégratrice connue en soi. Ces trois ponts de pesage sont espacés le long de la bande et leurs distances relatives sont connues.

Un générateur tachométrique numérique 14, ou tout autre dispositif similaire, fournit des impulsions dont le nombre est directement lié au déplacement linéaire de la bande du convoyeur. En pratique, à un nombre N d'impulsions de la génératrice correspond une unité dX de l'espace bande. Le comptage des impulsions permet de déterminer une position sur la bande, indépendamment de la vitesse V de cette bande. Ce comptage permet également de repérer les positions respectives des ponts de pesage 11, 12 et 13. Etant donné que leurs distances relatives sont connues, ces derniers peuvent être repérés, en valeur relative, par le nombre d'unités d'espsce bande dX qui les séparent. A chaque pont de pesage 11, 12 et 13, est respectivement associé un circuit électronique 15, 16 et 17 qui reçoit les impulsions de la génératrice tachométrique et qui fournit, pour chaque multiple N de ces impulsions, une indication de poids correspondant au poids P (X) de la bande transporteuse éventuellement chargée de produit. Comme mentionné précédemment, cette valeur du poids est identifiée grâce au fait qu'on lui associe une valeur déterminée de la variable d'espace. Elle est transmise à un contrôleur central 18 pourvu d'une mémoire et d'un organe de traitement des données, par exemple un microprocesseur, qui dans un premier temps, mémorise toutes les indications de poids fournies par les ponts de pesage et, dans un second temps, compare et traite ces indications d'une manière qui sera décrite plus en détail ci-dessous.

Dans l'exemple représenté, le dispositif comporte trois ponts de pesage 11, 12 et 13 qui fournissent, de manière décalée dans le temps, trois indications de poids $P_1(X_0)$, $P_2(X_0)$ et $P_3(X_0)$ pour une même valeur $X_0$ de la variable d'espace. Ces trois valeurs sont mémorisées par le contrôleur central 18. Lorsque la dernière valeur $P_3(X_0)$ est introduite, le microprocesseur recherche parmi les valeurs $P_2(X)$ et $P_1(X)$ enregistrées, celles qui correspondent à la valeur $X_0$ de la variable d'espace X, par exemple en "remontant" sur le tableau des valeurs mémorisées d'un nombre de valeurs correspondant à la distance ndX (multiple de l'unité d'espace bande) qui sépare le troisième pont de mesure du second, et d'un nombre de valeurs correspondant à la distance mdX qui sépare le troisième pont de pesage du premier.

Un organe comparateur effectue alors un contrôle de vraisemblance en vérifiant par exemple les relations suivantes:

$$2 \times P_1(X_0) = P_2(X_0) + P_3(X_0) \qquad \text{à } \delta \text{ \% près}$$
$$2 \times P_2(X_0) = P_1(X_0) + P_3(X_0) \qquad \text{à } \delta \text{ \% près}$$
$$2 \times P_3(X_0) = P_1(X_0) + P_2(X_0) \qquad \text{à } \delta \text{ \% près}$$

où $\delta$ représente une marge d'erreur tolérée aur la détermination du poids mesuré.

Si ce contrôle de vraisemblance est satisfait, le contrôleur 18 accepte pour poids $P_{moy}(X_0) = 1/3 [P_1(X_0) + P_2(X_0) + P_3(X_0)]$ et calcule la totalisation avec cette valeur. Cette valeur instantanée, correspondant au point ayant une variable d'espace de valeur $X_0$, et la totalisation peuvent être affichées sur un écran de visualisation 19, ou enregistrées par un appareil enregistreur quelconque, 20, connu en soi.

Si ce contrôle de vraisemblance n'est pas satisfait, le contrôleur cherche à déterminer quelle est la valeur erratique en contrôlant:

$$P_1(X_0) = P_2(X_0) \qquad \text{à } \delta' \text{ \% près}$$
$$P_1(X_0) = P_3(X_0) \qquad \text{à } \delta' \text{ \% près}$$
$$P_2(X_0) = P_3(X_0) \qquad \text{à } \delta' \text{ \% près } (\delta' \text{ erreur tolérée})$$

Lorsque le comparateur a déterminé laquelle de ces valeurs doit être rejetée, il accepte comme poids vraisemblable la moyenne des deux valeurs non rejetées. En admettant que la mesure inacceptable est $P_3(X_0)$, le poids moyen répond à la formule suivante:

$$P_{moy}(X_0) = 1/2 \, [P_1(X_0) \, P_2(X_0)]$$

La totalisation s'effectue alors avec cette valeur moyenne-ci.

Cette manière de procéder permet de rejeter des mesures erratiques, de déterminer si l'une des balances présente une erreur systématique et de déclencher une alarme pour attirer l'attention de l'utilisateur. En cas de défaut systématique d'une des balances, le dispositif peut éventuellement continuer à fonctionner en mode dégradé en n'utilisaant plus que deux lectures au lieu de trois.

Ou point de vue de la précision du système, la théorie des calculs d'erreurs permet d'affirmer que le carré de la variance v du système est égal à la somme des carrés des variances des balances, soit:

$$v^2 = v_1{}^2 + v_2{}^2 + v_3{}^2$$

Et comme la variante est inversement proportionnelle à l'écart, on peut écrire:

$$S^{-2} = s_1{}^{-2} + s_2{}^{-2} + s_3{}^{-2} = 3_s{}^{-2}$$

où s est l'écart type de ponts de mesure de construction identique, d'où

$$S = s/\sqrt{3}$$

La précision du système est améliorée d'un facteur égal à la racine carrée du nombre de ponts de mesure. Dans le présent cas, ce facteur est égal à $\sqrt{3}$.

En effectuant ces opérations lorsque la bande circule à vide et en mémorisant les données moyennes, il devient possible de constituer un fichier signalétique précis, dans lequel sont répertoriées les valeurs moyennes des poids de la bande a vide, fournies par les trois ponts de pesage pour chacun des points de repère fictifs de cette bande. Une simple opération d'arithmétique permet de déterminer le poids de matière transportée par soustraction du poids moyen de la bande vide de la valeur du poids moyen de la bande chargée pour chaque point de repère fictif de la bande. Afin d'éviter une éventuelle dérive du point origine de la bande sous l'effet des imprécisions du générateur tachéométrique 14, il est matérialisé par un témoin 21 fixé à la bande, dont chaque passage produit dans un détecteur correspondant 22 un signal transmis au contrôleur central 18. Par exemple, le témoin peut être une plaquette d'acier détectée par un détecteur magnétique.

Bien que le dispositif décrit ne comporte que trois ponts de mesure, il serait envisageable d'augmenter ce nombre et d'effectuer la détermination du poids à partir des indications fournies par un nombre quelconque de ponts de pesage.

**Revendications**

1. Procédé de pesage en continu de produits divisés transportés par un convoyeur à bande, caractérisé en ce que l'on définit une unité de déplacement linéaire de la bande du convoyeur, en ce que l'on associe, à un ensemble de points de repère fictifs, régulièrement disposés le long de la bande, respectivement une variable d'espace correspondant à un nombre entier de ces unités comptées à partir d'un point origine de la bande, en ce que l'on effectue une mesure instantanée du poids de la bande et/ou des produits transportés par au moins trois ponts de pesage espacés le long de la bande, en ce que l'on met en mémoire les indications de poids fournies par ces ponts de pesage, et en ce que l'on compare les indications de poids obtenues pour un même point de repère de la bande auquel correspond une variable d'espace déterminée.

2. Procédé selon la revendication 1, caractérisé en ce que l'on définit une marge d'erreur acceptable sur l'indication de poids fournie par les ponts de pesage, en ce que l'on sépare lea indications de poids acceptables compte tenu de la marge d'erreur tolérée, des indications inacceptables compte tenu de cette marge d'erreur, en ce que l'on effectue la moyenne des indications de poids acceptables, et en ce que l'on transmet cette valeur à un dispositif de visualisation et/ou d'engegistrement.

3. Procédé selon la revendication 2, caractérisé en ce que l'on surveille en continu les indications de poids fournies par chacun des ponts de pesage, et en ce que l'on déclenche un signal lorsque l'indication de poids, fournie par au moins un de ces ponts, est inacceptable de façon répétitive.

4. Procédé selon la revendication 2, caractérisé en ce que l'on enclenche un dispositif d'alarme et l'on provoque l'arrêt de la machine lorsque aucune corrélation ne peut être établie entre les mesures fournies par les différents ponts de pesage.

5. Procédé selon la revendication 1, caractérisé en ce que l'on effectue une mesure instantanée du poids de la bande à vide, en ce que l'on mémorise, pour chacun des points de repère fictifs de la bande, le poids de la bande à vide, et en ce que l'on détermine le poids effectif de la matière transportée en retranchant, pour chacun des points de repère de la bande, la valeur déterminée du poids de la bande à vide de la valeur déterminée de la bande chargée.

6. Procédé selon la revendication 5, caractérisé en ce que l'on détermine, pour chacun des points de repère de la bande, une valeur moyenne du poids de la bande à vide en effectuant au moins trois mesures respectivement par les ponts de pesage espacés disposés le long de la bande, en mémorisant les valeurs obtenues, en les comparant et en faisant une moyenne des valeurs mesurées considérées comme acceptables compte tenu d'une marge d'erreur tolérée prédéterminée.

7. Dispositif pour la mise en oeuvre du procédé selon la revendication 1, comportant un convoyeur à bande, caractérisé en ce qu'il comporte un organe d'indexage pour déterminer une unité de déplacement linéaire de la bande et pour associer, à un ensemble de points de repère fictifs régulièrement disposés le long de la bande, respectivement une variable d'espace correspondant à un nombre entier de ces unités comptées à partir d'un point origine de la bande, au moins trois organes de mesure instantanée du poids de la bande et-ou des produits divisés transportés, ces organes étant respectivement montés sur au moins trois ponts de pesage espacés le long de la bande, une mémoire pour mémoriser les indications de poids fournies par les organes de pesage, et un organe comparateur pour comparer entre elles les indications de poids fournies par les organes de pesage pour un même point de repère fictif de la bande correspondant à une variable d''espace déterminée.

8. Dispositif selon la revendication 7, caractérisé en ce que l'organe comparateur est agencé pour comparer entre elles les indications de poids fournies par les organes de pesage en tenant compte d'une marge d'erreur tolérée prédéterminée, pour trier les indications de poids acceptables des indications de poids non acceptables compte tenu de la marge d'erreur tolérée, pour calculer une moyenne des indications de poids acceptables et pour transmettre cette moyenne calculée à un dispositif de visualisation et/ou d'enregistrement.

9. Dispositif selon la revendication 8, caractérisé en ce que la mémoire comporte des registres pour mémoriser le poids à vide de la bande en chaque point de repère fictif de la bande, et en ce que l'organe comparateur comporte un dispositif pour effectuer, pour chaque point de repère de la bande, la différence entre la valeur moyenne du poids mesuré de la bande chargée et la valeur moyenne du poids mesuré de la bande à vide.

10. Dispositif selon la revendication 7, caractérisé en ce qu'il comporte un dispositif d'alarme pour signaler l'absence de corrélation entre les mesures effectuées par les différents organes de mesure.

11. Dispositif selon la revendication 7, caractérisé en ce qu'il comporte un dispositif d'alarme pour signaler les erreurs répétitives d'au moins un organe de mesure.

**Patentansprüche**

1. Verfahren zum kontinuierlichen Wiegen von Schüttgütern, die auf einem Förderband transportiert werden,
dadurch gekennzeichnet, daß
man eine Einheit für die Lineargeschwindigkeit des Förderbandes bestimmt, daß man einer gleichmäßig entlang des Bandes angeordneten Gruppe von fiktiven Markierungspunkten jeweils eine Bereichsgröße zuordnet, welche einer ganzzahligen Menge dieser vom Anfangspunkt des Bandes aus gezählten Einheiten entspricht, daß man durch mindestens drei entlang des Bandes in Abständen angeordnete Wiegebereichen eine Momentanmessung des Bandgewichtes und/oder der transportierten Güter durchführt, daß man die durch diese Wiegebrücken gelieferten Gewichtsangaben in einen Rechnerspeicher gibt und daß man die erhaltenen Gewichtsangaben vergleicht für ein und denselben Markierungspunkt des Bandes, welchem eine bestimmte Bereichsgröße entspricht.

2. Verfahren nach Anspruch 1,
dadurch gekennzeichnet, daß
man eine zulässige Fehlertoleranz für die von den Wiegebrücken gelieferten Gewichtsangaben festlegt, daß man die unter Berücksichtigung der zulässigen Fehlertoleranz befriedigenden Gewichtsangaben von den unter Berücksichtigung der zulässigen Fehlertoleranz unbefriedigenden Gewichtsangaben trennt, daß man das Mittel aus den befriedigenden Gewichtsangaben bildet, und daß man diesen Wert einer Einrichtung zum Ablesen und/oder zum Registrieren zuführt.

3. Verfahren nach Anspruch 2,
dadurch gekennzeichnet, daß

man die von jeder der Wiegebrücken gelieferten Gewichtsangaben laufend überwacht und daß man ein Signal auslöst, wenn die Gewichtsangabe von mindestens einer der Wiegebrücken im wiederholten Falle unbefriedigend ist.

4. Verfahren nach Anspruch 4,
dadurch gekennzeichnet, daß

man eine Alarmeinrichtung einschaltet und das Abstellen der Maschine veranlaßt, wenn keine Wechselbeziehung zwischen den von den verschiedenen Wiegebrucken gelieferten Messungen hergestellt werden kann.

5. Verfahren nach Anspruch 1,
dadurch gekennzeichnet, daß

man eine Momentanmessung des Gewichtes des leeren Bandes durchführt, daß man für jeden fiktiven Markierungspunkt des Bandes das Gewicht des leeren Bandes speichert, und daß man das tatsächliche Gewicht der transportierten Materie bestimmt, indem man für jeden Markierungspunkt am Band den ermittelten Wert des Gewichtes des leeren Bandes von dem ermittelten Wert des Gewichtes des belasteten Bandes abzieht.

6. Verfahren nach Anspruch 5,
dadurch gekennzeichnet, daß

man für jeden der Bandmarkierungspunkte einen Mittelwert für das Gewicht des leeren Bandes bestimmt, indem man jeweils mindestens 3 Messungen mit den entlang des Bandes in Abständen angeordneten Wiegebrücken durchführt, die erhaltenen Werte speichert, sie miteinander vergleicht und ein Mittel der gemessenen und als befriedigend angesehenen Werte bildet, unter Berücksichtigung einer vorbestimmten zugelassenen Fehlertoleranz.

7. Einrichtung für die Anwendung des Verfahrens nach Anspruch 1, mit einem Förderband,
dadurch gekennzeichnet, daß

sie eine Kodierungseinrichtung aufweist, um eine Einheit für die Lineargeschwindigkeit des Bandes zu bestimmen und um einer gleichmäßig entlang des Bandes angeordneten Gruppe von fiktiven Markierungspunkten jeweils eine Bereichsgröße zuzuordnen, welche einer ganzzahligen Menge dieser, vom Anfangspunkt des Bandes aus gezählten Einheiten entspricht, daß es weiterhin mindestens drei Einrichtungen für die Momentanmessung des Bandgewichtes und/oder der transportierten Schüttgüter aufweist, wobei diese Einrichtungen jeweils auf mindestens drei entlang des Bandes in Abständen angeordneten Wiegebrücken montiert sind, des weiteren einen Speicher, um die von den Wiegeeinrichtungen gelieferten Gewichtsangaben zu speichern und eine Vergleichseinrichtung, um die von den Wiegeeinrichtungen von ein und demselben fiktiven Markierungspunkt des Bandes gelieferten Gewichtsangaben untereinander zu vergleichen, wobei Letzterer einer vorbestimmten Bereichsgröße entspricht.

8. Einrichtung nach Anspruch 7,
dadurch gekennzeichnet, daß

die Vergleichseinrichtung in der Lage ist, unter Berücksichtigung einer vorbestimmten zugelassenen Fehlertoleranz die von den Wiegeeinrichtungen gelieferten Gewichtsangaben untereinander zu vergleichen, um unter Berücksichtigung der zugelassenen Fehlertoleranz die befriedigenden Gewichtsangaben von den unbefriedigenden Gewichtsangaben zu trennen, um einen Mittelwert der befriedigenden Gewichtsangaben zu errechnen und um diesen errechneten Mittelwert einer Einrichtung zum Ablesen und/oder zur Registrierung zuzuführen.

9. Einrichtung nach Anspruch 8,
dadurch gekennzeichnet, daß

der Speicher Register aufweist, um das Leergewicht des Bandes an jedem fiktiven Markierungspunkt des Bandes zu speichern und daß die Vergleichseinrichtung einen Baustein aufweist, um für jeden Markierungspunkt des Bandes den Unterschied zwischen dem gemessenen Mittelwert für das belastete Band und den gemessenen Mittelwert für das leere Band zu ermitteln.

10. Einrichtung nach Anspruch 7,
dadurch gekennzeichnet, daß

sie eine Alarmvorrichtung aufweist, um das Ausbleiben der Wechselbeziehungen zwischen den von den verschiedenen Meßeinrichtungen ausgeführten Messungen anzuzeigen.

11. Einrichtung nach Anspruch 7,
dadurch gekennzeichnet, daß

sie eine Alarmvorrichtung aufweist, um wiederholte Fehler von mindestens einer Meßeinrichtung anzuzeigen.

6

# 0 120 813

**Claims**

1. A method for continuous weighing of divided products transported on a conveyor belt, characterized in that an unit of linear displacement of the conveyor belt is defined, in that a respective space variable corresponding to a total number of these units counted from the point of origin of the belt is associated with a plurality of theoretical reference points regularly disposed along the belt, in that an instantaneous measurement of the weight of the belt and/or of the products conveyed by at least three weighing stations disposed along the lenght of the belt is effectued, in that the weight data obtained from said weighing station are stored in a memory and in that the generated data for a particular reference point upon the belt for a corresponding determinate space variable are compared.

2. A method according to claim 1, characterized in that an acceptable margin of error for the weight data furnished by the weighing stations is predefined, in that the acceptable weight data are separated from the inacceptable data, taking into account the predefined margin of error, in that a mean value of acceptable weights is calculated and in that this value is transmitted to a visual display monitor and/or data recording device.

3. A method according to claim 2, characterized in that the weight data furnished by each of the weighing stations are maintained under constant surveillance, and in that a signal is triggered when the weight data furnished by at least one of the weighing stations is repeatedly inacceptable.

4. A method according to claim 2, characterized in that an alarm is triggered and in that the apparatus is stopped when no correlation can be established between the measurements provided by the different weighing stations.

5. A method according to claim 1, characterized in that an instantaneous measurement of the weight of the empty belt is effectued, and in the weight of the empty belt at each of the theoretical reference points therealong is stored in memory, and in that the effective weight of the material transported is determined by subtracting, for each reference point along the belt, the determinate weight of the empty belt from the determinate value of the loaded belt.

6. A method according to claim 5, characterized in that for each reference point along the belt, a mean weight value for the empty belt is determined by taking at least three respective measurements with the spaced apart weighing stations disposed along the lenght of the belt, storing the values obtained in a memory, comparing the values and taking a mean of the measured values considered acceptable taking into account a predetermined tolerated margin of error.

7. An apparatus according to the method as claimed in claim 1, comprising a conveyor belt, characterized in that it comprises a referencing means to determine a unit of linear displacement for the belt and to associate, with plurality of theoretical reference points regularly disposed along the length of the belt, a respective space variable corresponding to the entire number of these units counted from the point of origin of the belt, at least three means for instantaneously measuring the weight of the belt and/or of the divided products transported, said at least three means being respectively mounted on at least three weighing stations disposed along the length of the belt, a memory for storing the weight data furnished by the weighing means, and a comparator for making relative comparison of the weight data furnished by the weighing means for a given theoretical reference point upon the belt corresponding to a determined space variable.

8. An apparatus according to claim 7, characterized in that the comparator comprises means adapted to compare the relative weight data furnished by the weighing means taking into account a predetermined margin of tolerated error, to sort the acceptable weight data from the inacceptable weight data, taking into account the margin of error tolerated, to calculate, a mean acceptable weight, and to transmit this calculated mean to a visual and/or, recording device.

9. An apparatus according to claim 8, characterized in that the memory comprises means for storing the weight of the empty belt at each theoretical reference point therealong, and in that the comparator comprises a device to calculate, for each reference point on the belt, the difference between the mean value of weight measured on the loaded belt and the mean value of weight measured on the empty belt.

10. An apparatus according to claim 7, characterized in that it comprises an alarm device to signal lack of correlation between the measurements taken by the different measuring means.

11. An apparatus according to claim 7, characterized in that it comprises an alarm device to signal repeated errors in at least one measuring means.

7